# EUROPÄISCHE PATENTSCHRIFT

(11) **EP 0 906 816 B1**
(45) Veröffentlichungstag und Bekanntmachung des Hinweises auf die Patenterteilung: **20.11.2002**
(21) Anmeldenummer: 98118490.6
(22) Anmeldetag: 30.09.1998
(51) Int. Cl.: B28B 1/50, B28B 1/16, E04C 2/04

(54) **Verfahren zur Herstellung industriell vorgefertigter Wandelemente**
Process for making industrially prefabricated wall elements
Procédé pour la fabrication d'éléments de mur préfabriqués industriellement

(30) Priorität: 04.10.1997 DE 19743883
(43) Veröffentlichungstag der Anmeldung: 07.04.1999
(73) Patentinhaber: Dennert Poraver GmbH, 92353 Postbauer-Heng (DE)
(72) Erfinder: Dennert, Hans, Veit, D-96132 Schlüsselfeld (DE)
(74) Vertreter: Hübner, Gerd, Dipl.-Phys.

(56) Entgegenhaltungen:
- DE-A- 1 905 571
- FR-A- 1 513 060
- US-A- 5 002 620
- PATENT ABSTRACTS OF JAPAN vol. 015, no. 501 (M-1193), 18. Dezember 1991 & JP 03 219913 A (MATSUSHITA ELECTRIC WORKS LTD), 27. September 1991
- PATENT ABSTRACTS OF JAPAN vol. 015, no. 203 (M-1116), 24. Mai 1991 & JP 03 055204 A (MATSUSHITA ELECTRIC WORKS LTD), 11. März 1991

## Beschreibung

Die Erfindung betrifft ein Verfahren zur Herstellung eines industriell vorgefertigter Wandelementes und ein solches industriell vorgefertigtes Wandelement, insbesondere Außenwandelement, auf der Basis von Leichtbeton mit den im Oberbegriff der Ansprüche 1 und 9 angegebenen Merkmalen, wie sie durch die DE-A-19542315 bekannt sind.

Zum Hintergrund der vorliegenden Erfindung ist auszuführen, daß zur Errichtung von Rohbauten aus Rationalisierungsgründen zunehmend vorgefertigte Montagebauteile eingesetzt werden, so z. B. Vollmontage-Geschoßdecken, Montagetreppen etc.

Bei der Errichtung von Außenwänden dominiert dagegen noch die sehr lohnaufwendige Stein-auf-Stein-Bauweise, also der herkömmliche Mauerwerksbau.

Lediglich beim Bau von Industriehallen und dergleichen haben sich im Gegensatz zum Wohnungsbau vorgefertigte Wände durchgesetzt, weil dort einerseits wenig gegliederte Fassadenflächen vorliegen und andererseits vom Wohnungsbau abweichende Ansprüche an Wärmedämmung und Statik erfüllt werden müssen.

Soweit sich im Wohnungsbau auch die Vorfertigung von Außenwänden durchgesetzt hat, handelt es sich um nicht-massive Bauweisen, wie sie bei den klassischen Fertighäusern dominieren. Die geringe Fähigkeit dieser nicht-massiven Bauweisen, höhere statische Lasten aufzunehmen, beschränkt den Anwendungsbereich solcher Wände meist auf eine ein- oder zweigeschossige Bauweise.

Der Hauptgrund, weshalb im Wohnungsbau nach wie vor noch die Stein-auf-Stein-Bauweise vorherrscht, ist der Umstand, daß es keine allen Erfordernissen gerecht werdenden Montagewände gab. Letztere müssen nämlich folgende Anforderungen erfüllen:
- Großformatigkeit (die Wandelemente müssen geschoßhoch sein und über eine Raumbreite von mehreren Metern verlaufen)
- Unbrennbarkeit durch Einsatz mineralischer Grundstoffe
- statische Belastbarkeit
- hohe Wärmedämmung
- Erfüllung bauphysikalischer Anforderungen verschiedenster Art, nämlich z.B. Regendichtheit, optimales diffusionstechnisches Verhalten des Wandelements und Schalldämmung.

Die nachstehend aufgezählten, bekannten Varianten verschiedener Außenwand-Plattenelemente erfüllen diese Anforderungen nur zum Teil:
- Großformatige Außenwandtafeln aus Beton mit einer auf der inneren Wandoberfläche aufgebrachten Isolierung in Form von Kunststoff-Hartschaumplatten oder dergleichen haben einen bauphysikalisch ungünstigen Wandaufbau, der zu Tauwasserschäden Anlaß geben kann. Um diese zu vermeiden, müssen die Außenwandtafeln mit einer als Dampfbremse dienenden Kunststoff- oder Aluminiumfolie ausgestattet werden. Diese unterbindet jedoch die erwünschte Wasserdampf-Diffusionsfähigkeit von Außenwänden und ist daher bauphysikalisch höchst umstritten.
- Außenwand-Plattenelemente aus Beton mit außenliegender Wärmedämmung, wie sie den nächstkommenden Stand der Technik darstellen, sind dagegen bauphysikalisch günstiger. Sie sind unter dem Sammelbegriff "Wärmedämmverbundsysteme" oder "Thermohaut" bekannt. Die Anwendung dieses Wandaufbaus für industriell vorgefertigte Wände stößt aber auf große Probleme, da bei herstellerseitig aufgebrachter Dämmschicht aus Kunststoff-Hartschaum wegen dessen mechanischer Empfindlichkeit Beschädigungen beim Transport und bei der Montage unvermeidlich sind. Dies führt zu aufwendigen Nachbesserungen vor Ort an der Baustelle.
- Eine weitere Alternative sind vorgefertigte Außenwandelemente, bei denen die Zusatzisolierung nicht auf der inneren oder äußeren Wandoberfläche aufgebracht wird, sondern innerhalb der Wände. Diese als "Sandwich-System" bekannte Variante hat aber den Nachteil eines sehr hohen Fertigungsaufwandes in der Fabrik. Auch müssen zur Vermeidung von Tauwasserschäden zwischen der Betoninnenschale und der Wärmedämmung wiederum Dampfbremsen eingebaut werden, welche die Diffusionsfähigkeit der Außenwand zunichte machen. Darüber hinaus sind Betoninnen- und Betonaußenschale durch Edelstahlanker miteinander zu verbinden, um den dreischaligen Bauteilen einen festen Zusammenhalt zu verleihen. Diese Verbindung mit Hilfe von Edelstahlankern verursacht Wärmebrücken, da Stahl einen um den Faktor 150 höhere Wärmeleitfähigkeit als übliche Wärmedämmplatten aufweist. Aus diesem Grund hat sich auch dieser Typ von industriell vorgefertigten Außenwand-Plattenelementen in der Praxis nicht durchsetzen können.
- Anstelle von Betonbauteilen, bei denen die Wärmedämmung durch zusätzliche Isolierschichten erreicht wird, bieten sich auch vorgefertigte Wände mit homogenem Aufbau an, bei denen versucht wird, neben den statischen Erfordernissen auch die Wärmedämmung durch Anwendung leichter wärmedämmender Betonarten sicherzustellen. In der Regel bestehen sie aus haufwerksporigem Leichtbeton mit Blähton als Zuschlagstoff und Zement als Bindemittel.

Das Problem bei dieser Art von Wänden liegt in dem Umstand, daß eine gute Wärmedämmung die Verwendung sehr leichter Betonarten voraussetzt. Je leichter jedoch die zur Anwendung kommenden Betone sind, um so geringere mechanische Festigkeiten weisen sie auf. Um so weniger ausgeprägt ist folglich auch ihre Fähigkeit, die statischen Mindesterfordernisse bei mehrgeschossigen Gebäuden zu erfüllen.

Die in der Norm festgelegten Mindest-Betonfestigkeiten sind mit Leichtbetonen der Rohdichte Klasse 0,7 kg/dm³ zu erreichen. Derartige Materialien haben einen Rechenwert der Wärmeleitfähigkeit von bestenfalls 0,18 W/mK. Daraus resultieren bei Wanddicken von 30 cm k-Werte von 0,53 und bei 36,5 cm Wanddicke von 0,45. Größere Wanddicken zur erwünschten Reduzierung der k-Werte sind jedoch unwirtschaftlich und verringern den Wohnflächenanteil von Gebäuden mit vorgegebenen Außenabmessungen.

Zur Ersparnis von Heizenergie und zur Entlastung der Umwelt bei Verbrennung fossiler Brennstoffe sind aber für die Außenwände von Wohngebäuden niedrigere k-Werte bzw. bessere Wärmedämmwerte erforderlich, weshalb homogene Wände aus solchen Leichtbetonarten unwirtschaftlich und ökologisch wenig sinnvoll sind.

Als Lösungsansatz für die vorstehende Problematik ist in der DE 195 42 315 A1 bereits vorgeschlagen, Außenwand-Plattenelemente aus einer statisch belastbaren Traglage in Form von statisch belastbarem Betonmaterial und einer Wärmedämmlage bestehend aus einem Leichtbeton mit einer Trockenrohdichte unter 0,5 kg/dm³ aufzubauen. Der Leichtbeton der Wärmedämmlage besteht aus Leichtzuschlagstoff-Partikeln gebunden mit einer Bindemittelmatrix. In der vorgenannten Druckschrift wurde für die Traglage sowohl gefügedichter als auch haufwerksporiger Leichtbeton als mögliches Material angegeben. Ferner sollte der Leichtbeton der Wärmedämmlage eine porosierte Matrix aufweisen. Die Praxis hat allerdings zwischenzeitlich gezeigt, daß die Traglage aus Festigkeitsgründen aus einem gefügedichten Beton herzustellen ist. Darauf wird als Wärmedämmlage ein haufwerksporiger Leichtbeton - also ein Leichtbeton ohne Porosierung der Bindemittelmatrix - aufgebracht. Die Materialpaarung aus gefügedichtem Beton für die Traglage und geschäumten Leichtbeton für die Wärmedämmlage hat sich deswegen als problematisch erwiesen, weil aus dem geschäumten Leichtbeton Zementmilch nach unten austritt, die vom gefügedichten Beton nicht aufgenommen wird. Die Zementmilch bildet nach dem Abbinden eine dichte Schicht zwischen diesen beiden Lagen, die aufgrund ihrer unterschiedlichen physikalischen Eigenschaften die Gefahr in sich birgt, daß sich Wärmedämmlage und Traglage im Laufe der Zeit voneinander trennen.

Das Spannungsverhältnis zwischen hoher Wärmedämmfähigkeit und hoher Festigkeit, welche jeweils niedrigere bzw. höhere Trockenrohdichten Beton benötigen, wurde bei homogenen Leichtbetonplatten auch dadurch gemildert, daß statt haufwerksporigem Leichtbeton ein Leichtbeton mit geschäumter, porosierter Zement-Matrix als Bindemittel für die Leichtzuschläge verwendet wurde. Durch diese Maßnahme kann die Festigkeit des Leichtbetons bei gleicher Betonrohdichte gesteigert bzw. kann eine geforderte Festigkeit von z. B. LB2 mit niedrigeren Betonrohdichten erzielt werden, was wiederum zu besserer Wärmedämmung führt.

Derartige homogene Wände aus Leichtbeton mit Blähtongranulat als Leichtzuschlagstoff und geschäumter Zementmatrix erfüllen die DIN 4232 und wurden bekanntermaßen in den vergangenen Jahren vielfach produziert und verbaut. Es hat sich hierbei gezeigt, daß nach mehreren Jahren Standzeit die Außenwände damit ausgerüsteter Häuser Bauschäden insofern erleiden können, als sich die Putzschicht zusammen mit der äußersten Haut des Wandelementes flächig löst und zu Boden fällt.

Es hat sich herausgestellt, daß die Ursache dieser Bauschäden im Aufbau und Herstellungsverfahren des Wandelementes zu suchen ist. Der homogene Leichtbeton mit seiner geschäumten Zement-Bindemittelmatrix weist nämlich ein relativ hohes Wasser/Zement-Verhältnis auf, ist also dünnflüssiger als normaler Beton. Wird nun dieser Beton in eine liegende Stahlschalung gefüllt, wie dies zur Herstellung von Wandelementen üblich ist, dann sondert sich eine sehr dünnflüssige Zementmilch ab, die nach unten durchsickert und sich auf dem Boden des Formkastens aufstaut. In diesem Entmischungszustand binden Leichtbeton und Zementmilch ab. Die Rohdichte der aus der Zementmilch gebildeten Randschicht ist mit über 2,0 kg/dm³ um ein Mehrfaches höher als die des Leichtbetons. Entsprechend unterschiedlich sind auch andere physikalische Parameter wie Schwindung, E-Modul und der Temperatur-Ausdehnungs-Koeffizient, die bei der Zementmilchschicht wesentlich größer als beim geschäumten Leichtbeton sind.

Die unterschiedlichen Eigenschaften können bereits beim Entschalen der Wand zu enormen Problemen führen, weil z. B. die 1 bis 2 mm dünne, abgebundene Zementmilchschicht stärker an der Stahlschalung haftet als am Beton, deshalb vom angesteifen Beton abreißt und am Boden des Formkastens haften bleibt.

Dieses Problem kann durch besondere Maßnahmen behoben werden, indem z. B. in einem höheren Maße Schalöl auf den Boden des Formkastens ausgebracht wird. Allerdings macht das vorstehend erörterte Problem den Schwachpunkt der Wand nach dem Stand der Technik deutlich, nämlich die Separation der dünnen Zementhaut vom Rest des Wandquerschnittes. Auch bei ordnungsgemäßer Entschalung und Abbindung solcher Wandelemente zeigen diese nach dem Verbauen im Laufe der Jahre die eingangs erörterten Bauschäden, die durch die ständigen Temperaturschwankungen und die unterschiedlichen Längsdehnungen von Leichtbeton und des darauf aufgebrachten Putzes bewirkt werden. Es erfolgt nämlich ein Abscheren der mit dem Putz sehr fest verbundenen Zementhaut des Leichtbetons vom Wandelement und der Putz fällt großflächig herunter.

Ausgehend von der geschilderten Problematik des Standes der Technik liegt der Erfindung die Aufgabe zugrunde, ein Verfahren zur Herstellung industriell vorgefertigter Wandelemente und ein entsprechendes Wandelement anzugeben, bei dem ein sauberes Entschalen möglich und keine langfristigen Bauschäden durch Ablösen einer Zementhaut zu erwarten sind.

Diese Aufgabe wird dadurch gelöst, daß vor dem Einfüllen des geschäumten oder porosierten Leichtbetons in den Formkasten eine flüssigkeitsaufnehmende Vorsatzschicht eingefüllt wird, auf die der geschäumte oder porosierte Leichtbeton aufgebracht wird. Durch die flüssigkeitsaufnehmenden Eigenschaften der Vorsatzschicht wird die aus dem Leichtbeton aufgrund der Schwerkraft nach unten sickernde Zementmilch absorbiert und in dieser Schicht verteilt. Es kann sich also keine Zementhaut auf der Außenseite des Wandelementes bilden, so daß die damit verbundenen Probleme beseitigt sind.

Gemäß bevorzugten Ausführungsformen des Verfahrens bzw. des Wandelementes selbst besteht die Vorsatzschicht aus einem haufwerksporigen Leichtbeton, also aus einem Beton, der Leichtzuschlagstoffe und eine ungeschäumte Bindemittelmatrix aufweist. Die Rezeptur des Leichtbetons kann dabei so gewählt sein, daß sie der des geschäumten oder porosierten Leichtbetons mit Ausnahme des Schäummittels selbst entspricht. Dadurch werden also übereinstimmende Rohdichteklassen erreicht, wodurch die Vorsatzschicht in etwa die gleiche Wärmedämmfähigkeit aufweist wie die eigentliche Tragschicht des Wandelementes. Da jedoch die Festigkeit von haufwerksporigem Leichtbeton gegenüber einem gefügedichten Leichtbeton mit geschäumter Bindemittelmatrix bei gleicher Rohdichteklasse geringer ist, trägt die Vorsatzschicht in diesem Falle nur teilweise zur statischen Belastbarkeit des Wandelementes bei.

Insofern können die Rezepturen des haufwerksporigen Leichtbetons für die Vorsatzschicht und des geschäumten oder porosierten Leichtbetons auch so aufeinander abgestimmt sein, daß beide Betonarten etwa gleiche Festigkeitswerte aufweisen. Dazu muß ein haufwerksporiger Leichtbeton mit etwas höherer Rohdichte verwendet werden, so daß die Wärmedämmfähigkeit etwas geringer ist.

Als Alternative kann als Vorsatzschicht auch ein anderes Material mit flüssigkeitsaufnehmender Struktur vorgesehen sein, nämlich z. B. eine Feinmörtel- oder eine Putz-Schicht. Damit entfällt das Aufbringen einer sauberen Oberflächenschicht auf die Innenseite des Wandelementes bzw. einer Putzschicht auf der Außenseite.

Als weitere Materialalternative für die Vorsatzschicht ist ein saugfähiger, grobkörniger Leichtzuschlagstoff, wie z.B. ofentrockener, stark saugfähiger Blähschiefersplitt anzugeben. Dieser ist vorzugsweise in Körnungen von 4 bis 16 mm einzusetzen.

Diese Alternative ist vorteilhaft, da für die Vorsatzschicht nicht eine zweite Betonsorte angemischt und vorgehalten oder ein Spezialmaterial wie Feinmörtel- oder Putz auf Vorrat gelegt werden müssen. Es wird lediglich aus einem Vorratsbehälter die jeweils benötigte Menge Blähschiefersplitt abgezogen. Dieses Material, insbesondere in der als vorteilhaft erkannten Schichtdicke von 1 bis 2 cm ist preisgünstiger als ein entsprechendes Volumen Leichtbeton. Dieser Aspekt wird noch dadurch unterstützt, daß jeweils nur so viel Blähschiefersplitt verbraucht werden muß, wie wirklich benötigt wird. Bei eigens herzustellendem Leichtbeton muß aus praktischen Gründen jeweils eine gewisse Überschußmenge angemischt werden, die dann nach Beendigung der Produktion einer bestimmten Losgröße entsorgt werden muß. Schließlich erfolgt aufgrund der grobkörnigen Struktur des Leichtzuschlagstoffes ein intensiver Kontakt - gewissermaßen eine Verzahnung - des geschäumten Leichtbetons mit der Vorsatzschicht. Damit wird verhindert, daß sich eine dünne Zementmilchschicht vom geschäumten Leichtbeton ablöst.

Für die Vorsatzschicht mit haufwerksporigem Beton hat sich eine Dicke von 2 bis 5 cm als günstig herausgestellt, für eine Feinmörtel- oder eine Putzschicht eine solche von 0,5 bis 3 cm und für die Blähschiefersplittschicht von 1 bis 2 cm.

Durch die weiterhin vorgesehenen Verankerungselemente, die etwa wie übliche Abstandshalter für Bewehrungsstähle bei der Herstellung von Betonfertigteilen ausgeführt sein können, kann der Schichtzusammenhalt zwischen den einzelnen Wandelement-Lagen, also zwischen der eigentlichen tragenden Lage, der Vorsatzschicht und - sollte sie sich bilden - einer Zementmilchschicht erhöht werden. Durch entsprechende Ausformungen an den Verankerungselementen kann eine besonders gute Verzahnung - insbesondere im Hinblick auf die Bildung der erwähnten Zementmilchschicht - erreicht werden.

Weitere Merkmale, Einzelheiten und Vorteile der Erfindung ergeben sich aus den nachfolgend beschriebenen Ausführungsbeispielen für das erfindungsgemäße Verfahren und entsprechend hergestellte Wandelemente.

### Beispiel 1:

### Der Verfahrensablauf gestaltet sich wie folgt:

In einen flachen, quaderförmigen Formkasten wird ein haufwerksporiger Leichtbeton der Rohdichteklasse 600 in einer Dicke von 2 bis 5 cm gleichmäßig ausgebracht und gegebenenfalls durch Rütteln vorverdichtet. Anschließend wird Leichtbeton mit geschäumter Bindemittel-Matrix auf diese Vorsatzschicht in einer Schichtdicke aufgebracht, daß das Wandelement eine Dicke von z. B. 36,5 cm aufweist.

Für den haufwerksporigen Leichtbeton der Vorsatzschicht wird ein Leichtbeton der Rohdichteklasse 600 mit folgender Rezeptur bezogen auf 1 m³ Festbeton verwendet:
- ca. 135 kg Blähglasgranulat der Körnung 1 - 2 mm,
- ca. 90 kg Blähglasgranulat der Körnung 4 - 8 mm,
- 323 kg Zement (Typ CM I 42,5 R),
- 152 kg Wasser.

Dieser Leichtbeton weist eine Druckfestigkeit nach 28 Tagen von 4,4 N/mm² und eine Wärmeleitfähigkeit von 0,16 W/mK auf.

Für den Leichtbeton mit geschäumter Zementmatrix wird eine Leichtbeton der Rohdichteklasse 450 mit folgender Rezeptur bezogen auf 1 m³ Festbeton verwendet:
- 110 kg Blähglasgranulat der Körnung 1 - 2 mm,
- 80 kg Blähglasgranulat der Körnung 4 - 8 mm,
- 200 kg Zement (Typ CM I 42,5 R),
- 125 kg Wasser, und
- 250 g Luftporenbildner (Typ LP 75 der Firma Woermann, Darmstadt, DE)

Dieser Leichtbeton weist eine Druckfestigkeit nach 28 Tagen von 4,5 N/mm² und eine Wärmeleitfähigkeit von 0,12 W/mK auf.

Das zumindest angesteifte oder vollständig abgebundene Wandelement wird aus dem Formkasten entschalt, gegebenenfalls noch ausgehärtet und kann schließlich verbaut werden. Dabei kann die Vorsatzschicht-Seite beim Verbauen des Wandelementes als Wandaußen- oder innenseite genutzt werden. In beiden Fällen bietet die haufwerksporige Vorsatzschicht einen griffigen Untergrund für die Putzhaftung beim späteren Verputzen.

### Beispiel 2 :

Im Unterschied zu Beispiel 1 wird in den flachen Formkasten ein Leichtputz mit einer Schichtdicke von 0,5 bis 1 cm aus einer herkömmlichen Putzmaschine ausgebracht. Der Leichtputz weist als Leichtzuschlagstoff Blähglasgranulat mit einer Körnung von 0,25 bis 0,5 mm in einer unporosierten Zementmatrix auf. Der Wassergehalt des Leichtputzes wird auf etwa 40 Masse-Prozent eingestellt. Die Rohdichte des Leichtputzes beträgt weniger als 1,0 kg/dm³.

Nach einem Ansteifen dieser Leichtputzschicht für eine Zeit von ca. 15 bis 30 Minuten, die gegebenenfalls durch entsprechende Zusätze reduziert werden kann, wird ein gefügedichter Leichtbeton mit geschäumter Zementmatrix der Rohdichteklasse 450 auf die Leichtputzschicht aufgebracht. Die vorstehende Rezeptur für den Leichtbeton der Rohdichteklasse 450 kann dabei übernommen werden.

Da die als Vorsatzschicht wirkende Leichtputzschicht Flüssigkeit aufnehmen kann, verteilt sich darin die aus dem Leichtbeton mit geschäumter Zementmatrix austretende Zementmilch.

Im übrigen ist darauf hinzuweisen, daß das erfindungsgemäße Wandelement bereits herstellungsseitig mit einer dichten Putzaußenschicht versehen sein kann, die als erste Lage in die Form eingebracht wird. Darauf ist dann eine haufwerksporige Vorsatzschicht zur Aufnahme der Zementmilch aus der geschäumten Betonschicht vorzusehen, um die beim Stand der Technik auftretenden Probleme zu vermeiden.

## Patentansprüche

1. Verfahren zur Herstellung industriell vorgefertigter Wandelemente, insbesondere Außenwandelemente, auf der Basis von Leichtbeton-Material, wobei ein Leichtbeton, bestehend aus mindestens einem Leichtzuschlagstoff in einer geschäumten oder porosierten Bindemittelmatrix, in einen Formkasten gefüllt und nach zumindest Ansteifung entformt wird, **dadurch gekennzeichnet, daß** vor dem Einfüllen des geschäumten oder porosierten Leichtbetons eine flüssigkeitsaufnehmende Vorsatzschicht in den Formkasten eingefüllt wird, auf die der geschäumte oder porosierte Leichtbeton aufgebracht wird.

2. Verfahren nach Anspruch 1, **dadurch gekennzeichnet, daß** die Vorsatzschicht aus einem haufwerksporigen Leichtbeton besteht.

3. Verfahren nach Anspruch 2, **dadurch gekennzeichnet, daß** die Rezeptur für den haufwerksporigen Leichtbeton der Vorsatzschicht der Rezeptur des geschäumten oder porosierten Leichtbetons mit Ausnahme des Schaummittels entspricht.

4. Verfahren nach Anspruch 2, **dadurch gekennzeichnet, daß** die Rezeptur für den haufwerksporigen Leichtbeton so auf die Rezeptur des geschäumten oder porosierten Leichtbetons abgestimmt ist, daß beide Betonarten etwa gleiche Festigkeitswerte oder gleiche Wärmeleitzahlen aufweisen.

5. Verfahren nach Anspruch 1, **dadurch gekennzeichnet, daß** die Vorsatzschicht aus einem saugfähigen, grobkörnigen Leichtzuschlagstoff, insbesondere Blähschiefersplitt besteht.

6. Verfahren nach Anspruch 1, **dadurch gekennzeichnet, daß** die Vorsatzschicht aus einer Feinmörtel- oder einer Putz-Schicht mit flüssigkeitsaufnehmender Struktur besteht, welche Schicht eine Dicke von vorzugsweise etwa 0,5 bis 3 cm aufweist.

7. Verfahren nach einem der Ansprüche 1 bis 6, **dadurch gekennzeichnet, daß** die Vorsatzschicht in einer Dicke von etwa 0,5 bis 5, vorzugsweise 1 bis 2 cm, in den Formkasten eingebracht wird.

8. Verfahren nach einem der Ansprüche 1 bis 7, **dadurch gekennzeichnet, daß** in die Form-Verankerungselemente zur Erhöhung des Schichtzusammenhalts zwischen den einzelnen Wandelement-Lagen eingelegt werden.

9. Industriell vorgefertigtes Wandelement, insbesondere Außenwandelement, hergestellt mit einem Verfahren nach einem der Ansprüche 1 bis 8, mit einer wärmedämmenden und tragenden Hauptschicht aus einem geschäumten oder porosierten Leichtbeton, der aus einem Leichtzuschlagstoff in einer geschäumten oder porosierten Bindemittelmatrix besteht, **gekennzeichnet durch** eine Vorsatzschicht aus einem in nicht abgebundenem Zustand flüssigkeitsaufnehmenden Material.

10. Wandelement nach Anspruch 9, **dadurch gekennzeichnet, daß** die Vorsatzschicht aus einem haufwerksporigen Leichtbeton vorzugsweise einer Dicke von etwa 2 bis 5 cm besteht.

11. Wandelement nach Anspruch 9, **dadurch gekennzeichnet, daß** die Vorsatzschicht aus einem Feinmörtel- oder Putzmaterial mit im nicht abgebundenen Zustand flüssigkeitsaufnehmender Struktur besteht, welche eine Dicke von vorzugsweise etwa 0,5 bis 3 cm aufweist.

12. Wandelement nach einem der Ansprüche 9 bis 11, **dadurch gekennzeichnet, daß** der geschäumte Leichtbeton auf folgender Rezeptur bezogen auf 1 m³ Festbeton basiert:
- ca. 190 kg Leichtzuschlagstoff, insbesondere Blähglasgranulat der Körnung 1 mm bis 8 mm,
- ca. 200 kg Zement,
- ca. 125 kg Wasser, und
- ca. 0,25 kg Luftporenbildner.

13. Wandelement nach Anspruch 10, **dadurch gekennzeichnet, daß** der haufwerksporige Leichtbeton auf folgender Rezeptur bezogen auf 1 m³ Festbeton basiert:
- ca. 225 kg Leichtzuschlagstoff, insbesondere Blähglasgranulat der Körnung 1 bis 8 mm,
- ca. 325 kg Zement, und
- ca. 150 kg Wasser.

14. Wandelement nach einem der Ansprüche 9, 11 oder 12, **dadurch gekennzeichnet, daß** das Putzmaterial für die Vorsatzschicht aus einem Leichtputz vorzugsweise mit Blähglasgranulat einer Körnung von 0,25 mm bis 0,5 mm als Leichtzuschlagstoff in einer Bindemittelmatrix besteht, wobei der Leichtputz eine Rohdichte von 1,0 kg/dm³ oder darunter aufweist.

15. Wandelement nach Anspruch 9, **dadurch gekennzeichnet, daß** die Vorsatzschicht aus einem saugfähigen, grobkörnigen Leichtzuschlagstoff, insbesondere Blähschiefersplitt besteht.

16. Wandelement nach einem der Ansprüche 9 bis 15, **gekennzeichnet durch** Verankerungselemente zur Erhöhung des Schichtzusammenhalts zwischen den einzelnen Wandelementlagen.

## Claims

1. Method for the manufacture of industrially prefabricated wall panels, in particular outside wall panels, on the basis of lightweight concrete material, wherein lightweight concrete, which consists of at least a lightweight aggregate in a foamed or porous binder matrix, is filled into a molding box and removed from the mold after at least initial setting, **characterized in that**, prior to the foamed or porous lightweight concrete being filled in, a liquid-absorbing face layer is filled into the molding box, onto which is applied the foamed or porous lightweight concrete.

2. Method according to claim 1, **characterized in that** the face layer consists of no-fines lightweight concrete.

3. Method according to claim 2, **characterized in that** the recipe for the no-fines lightweight concrete of the face layer corresponds to the recipe of the foamed or porous lightweight concrete with the exception of the foamer.

4. Method according to claim 2, **characterized in that** the recipe for the no-fines lightweight concrete is adjusted to the recipe of the foamed or porous lightweight concrete for both types of concrete to have approximately identical strength coefficients or identical coefficients of thermal conductivity.

5. Method according to claim 1, **characterized in that** the face layer consists of an absorbent, coarse-grained lightweight aggregate, in particular expanded shale grit.

6. Method according to claim 1, **characterized in that the** face layer consists of a layer of fine mortar or cast of liquid-absorbent structure, having a thickness of preferably 0.5 to 3 cm.

7. Method according to one of claims 1 to 6, **characterized in that the** face layer is filled into the molding box by a thickness of 0.5 to 5, preferably 1 to 2 cm.

8. Method according to one of claims 1 to 7, **characterized in that** anchoring elements are placed into the mold, increasing the cohesion of the individual wall panel layers.

9. Industrially prefabricated wall panel, in particular outside wall panel, manufactured by a method according to one of claims 1 to 8, comprising a heat-insulating and structural main layer of foamed or porous lightweight concrete which consists of a lightweight aggregate in a foamed or porous binder matrix, **characterized by** a face layer of a material which is liquid absorbent when not set.

10. Wall panel according to claim 9, **characterized in that** the face layer consists of no-fines lightweight concrete, preferably of a thickness of approximately 2 to 5 cm.

11. Wall panel according to claim 9, **characterized in that** the face layer consists of fine mortar or cast material of a structure that is liquid absorbent when not set, having a thickness of preferably 0.5 to 3 cm.

12. Wall panel according to one of claims 9 to 11, **characterized in that** the foamed lightweight concrete is based on the following recipe referred to 1 m³ of hardened concrete:
- approximately 190 kg lightweight aggregate, in particular expanded glass pellets of a granular size of 1 mm to 8 mm;
- approximately 200 kg cement;
- approximately 125 kg water; and
- approximately 0.25 kg air void forming agent.

13. Wall panel according to claim 10, **characterized in that** the no-fines lightweight concrete is based on the following recipe referred to 1 m³ of hardened concrete:
- approximately 225 kg lightweight aggregate, in particular expanded glass pellets of a grain size of 1 to 8 mm;
- approximately 325 kg cement; and
- approximately 150 kg water.

14. Wall panel according to one of claims 9, 11 or 12, **characterized in that** the cast material for the face layer consists of lightweight cast preferably with expanded glass pellets of a granular size of 0.25 mm to 0.5 mm as a lightweight aggregate in a binder matrix, with the lightweight cast having an apparent density of, or below, 1.0 kg/dm³.

15. Wall panel according to claim 9, **characterized in that** the face layer consists of an absorbent, coarse-grained lightweight aggregate, in particular expanded shale grit.

16. Wall panel according to one of claims 9 to 15, **characterized by** anchoring elements for increasing the cohesion between the individual wall panel layers.

## Revendications

1. Procédé pour la fabrication de panneaux préfabriqués industriellement, notamment panneaux extérieurs, sur la base de matériau de béton léger, béton léger comportant au moins des agrégats légers dans un emballage en liant moussé ou poreux qui est rempli dans un châssis de moule et démoulé au moins après prise initiale, **caractérisé en ce qu'**avant remplissage du béton léger moussé ou poreux, une couche de parement absorbante de liquide est remplie dans le châssis de moule, sur laquelle est épandu le béton léger moussé ou poreux.

2. Procédé selon la revendication 1, **caractérisé en ce que** la couche de parement se compose de béton léger de texture caverneuse.

3. Procédé selon la revendication 2, **caractérisé en ce que** la recette pour le béton léger de texture caverneuse correspond à la recette du béton léger moussé ou poreux à l'exception de l'agent moussant.

4. Procédé selon la revendication 2, **caractérisé en ce que** la recette pour le béton léger de texture caverneuse est accordée à la recette du béton léger moussé ou poreux de telle sorte que les deux types de béton aient les mêmes propriétés de résistance ou les mêmes coefficients de conductibilité thermique.

5. Procédé selon la revendication 1, **caractérisé en ce que** la couche de parement se compose d'agrégats légers absorbants à gros grains, notamment de paillettes d'ardoise expansée.

6. Procédé selon la revendication 1, **caractérisé en ce que** la couche de parement se compose d'une couche de mortier de parement ou d'enduit à structure absorbante de liquide, couche qui a une épaisseur de préférence d'environ 0,5 à 3 cm.

7. Procédé selon l'une quelconque des revendications 1 à 6, **caractérisé en ce que** la couche de parement est épandue dans le châssis de moule à une épaisseur d'environ 0,5 à 5, de préférence 1 à 2 cm.

8. Procédé selon l'une quelconque des revendications 1 à 7, **caractérisé en ce que** des éléments d'ancrage sont placés dans le moule pour l'augmentation de la cohésion entre les couches individuelles de panneaux préfabriqués.

9. Panneau préfabriqué industriellement, notamment panneau extérieur, fabriqué par un procédé selon l'une quelconque des revendications 1 à 8, comportant une couche principale calorifuge et porteuse en béton léger mousseux ou poreux qui se compose d'agrégats légers dans un emballage en liant mousseux ou poreux, **caractérisé par** une couche de parement en matériau absorbant de liquide en état de non-prise.

10. Panneau préfabriqué selon la revendication 9, **caractérisé en ce que** la couche de parement se compose de béton léger de texture caverneuse de préférence d'une épaisseur d'environ 2 à 5 cm.

11. Panneau préfabriqué selon la revendication 9, **caractérisé en ce que** la couche de parement se compose d'un matériau de mortier de parement ou d'enduit à structure absorbante de liquide en état de non-prise d'une épaisseur de préférence d'environ 0,5 à 3 cm.

12. Panneau préfabriqué selon l'une quelconque des revendications 9 à 11, **caractérisé en ce que** le béton léger mousseux se base sur la recette suivante par rapport à 1 m³ de béton solidifié:
- environ 190 kg d'agrégats légers, notamment des granules en verre expansé d'une grosseur de grain de 1 mm à 8 mm;
- environ 200 kg de ciment;
- environ 125 kg d'eau; et
- environ 0,25 kg d'aérateur.

13. Panneau préfabriqué selon la revendication 10, **caractérisé en ce que** le béton léger de texture caverneuse se base sur la recette suivante par rapport à 1 m³ de béton solidifié:
- environ 225 kg d'agrégats légers, notamment des granules en verre expansé d'une grosseur de grain de 1 à 8 mm;
- environ 325 kg de ciment; et
- environ 150 kg d'eau.

14. Panneau préfabriqué selon l'une quelconque des revendications 9, 11 ou 12, **caractérisé en ce que** l'enduit pour la couche de parement est un enduit léger de préférence avec des granules en verre expansé d'une grosseur de grain de 0,25 mm à 0,5 mm comme agrégats légers dans un emballage de liant, l'enduit léger ayant une masse volumique apparente de 1,0 kg/dm³ ou moins.

15. Panneau préfabriqué selon la revendication 9, **caractérisé en ce que** la couche de parement se compose d'agrégats légers absorbants à gros grains, notamment de paillettes d'ardoise expansée.

16. Panneau préfabriqué selon l'une quelconque des revendications 9 à 15, **caractérisé par** des éléments d'ancrage pour l'augmentation de la cohésion entre les couches individuelles de panneaux préfabriqués.
